## Europäisches Patentamt
## European Patent Office
## Office européen des brevets

(11) Veröffentlichungsnummer: **0 203 419**
**B1**

(12) **EUROPÄISCHE PATENTSCHRIFT**

(45) Veröffentlichungstag der Patentschrift:
07.03.90

(21) Anmeldenummer: 86106129.9

(22) Anmeldetag: 05.05.86

(51) Int. Cl.⁴: **H02M 3/335**

(54) Primärgetaktetes Schaltnetzteil.

(30) Priorität: 23.05.85 DE 3518621

(43) Veröffentlichungstag der Anmeldung:
03.12.86 Patentblatt 86/49

(45) Bekanntmachung des Hinweises auf die Patenterteilung:
07.03.90 Patentblatt 90/10

(84) Benannte Vertragsstaaten:
AT CH DE FR GB IT LI

(56) Entgegenhaltungen:
EP-A- 0 111 365
DE-A- 2 724 358

(73) Patentinhaber: Siemens Aktiengesellschaft,
Wittelsbacherplatz 2, D-8000 München 2(DE)

(72) Erfinder: Segger, Bernd, Isarstrasse 4,
D-8520 Erlangen(DE)

ACTORUM AG

**Beschreibung**

Die Erfindung bezieht sich auf ein primärgetaktetes Schaltnetzteil mit mehreren galvanisch getrennten Sekundärkreisen, wobei der Ausgang des Sekundärkreises mit einem Istwertgeber mit nachgeschaltetem Regler verbunden ist und wobei dieser Ausgang mittels einer dem Glättungskondensator nachgeschalteten Sicherung abgesichert ist.

Bei einem derartig im Handel erhältlichen primärgetakteten Schaltnetzteil muß mindestens ein weiterer Sekundärkreis mit einer Spannungsüberwachung versehen sein, die bei Ansprechen der Sicherung des geregelten Sekundärkreises den Regler derart steuert, daß das Tastverhältnis des primären Leistungsschalters vermindert wird. Ohne eine derartige Spannungsüberwachung würden die mitlaufenden Spannungen der weiteren Sekundärkreise unerlaubt hohe Werte annehmen und es würden Folgeschäden in den zu versorgenden Schaltungen entstehen.

Aus der DE-A-2 724 358 ist eine Anordnung und Einrichtung zur Anzeige einer zerstörten Sicherung mittels Glühlampe, Glimmlampe und akustischer Meldeeinrichtung bekannt. Dabei ist die Glühlampe und/oder die Glimmlampe und/oder die akustische Meldeeinrichtung mit einem Transistor ggf. mit einem Widerstand in Reihe zwischen die beiden Anschlüsse einer Stromversorgung geschaltet.

Außerdem liegt ein ohmscher Spannungsteiler, dessen Teilungspunkt mit der Basis des Transistors verbunden ist, parallel zum Verbraucher, wobei der Transistor bei intakter Sicherung sperrt und bei zerstörter Sicherung leitet. Sobald der Transistor leitet, fließt ein Strom durch die Glühlampe und/oder die Glimmlampe und/oder die akustische Meldeeinrichtung. Somit wird eine zerstörte Sicherung gut sichtbar und/oder hörbar und störungssicher angezeigt.

Der Erfindung liegt nun die Aufgabe zugrunde, ein primärgetaktetes Schaltnetzteil mit mehreren galvanisch getrennten Sekundärkreisen der eingangs genannten Art so auszubilden, daß mit einfachen Mitteln ein Überspannungsschutz möglich ist.

Diese Aufgabe wird erfindungsgemäß gelöst mit dem kennzeichnenden Merkmal des Anspruchs 1.

Bei dem erfindungsgemäßen primärgetakteten Schaltnetzteil mit mehreren galvanisch getrennten Sekundärkreisen wird der Schalter geschlossen, wenn die Sicherung durch Überlastung auslöst. Dadurch erhält man einen Spannungssprung am Ausgang des Istwertgebers. Der Betrag dieses Spannungssprunges ist abhängig vom Verhältnis der Referenzspannung zur Ausgangsspannung des Istwertgebers. Diesem Spannungssprung wirkt der Regler entgegen, d.h., das Tastverhältnis des primären Leistungsschalters wird herabgesetzt. Außerdem nimmt im Störungsfall die Glättungskondensatorspannung in einer vorbestimmten Zeit ab und damit auch die Spannung am Ausgang des Istwertgebers. Sobald die Spannung am Ausgang des Istwertgebers kleiner ist als die Referenzspannung des Reglers, so wird das Tastverhältnis wieder erhöht. Dadurch bildet die Referenzspannung des Reglers einen stabilen Punkt bei angesprochener Sicherung im Störungsfall. Die Referenzspannung wird bestimmt durch die Gestaltung des Istwertgebers. Somit erhält man eine einfache Ausführungsform eines Überspannungsschutzes für ein primärgetaktetes Schaltnetzteil mit mehreren galvanisch getrennten Sekundärkreisen, wobei im Störungsfall der geregelte Sekundärkreis auf eine Ausgangsspannung geregelt wird, die gegenüber der geregelten Ausgangsspannung im Betriebszustand niedriger ist. Außerdem wird dadurch erreicht, daß die mitlaufenden Spannungen der anderen Sekundärkreise ihre Spannungswerte nicht erhöhen.

Als einfacher Istwertgeber ist ein Spannungsteiler vorgesehen, der von der positiven Ausgangsklemme des geregelten Sekundärkreises gegen Masse geschaltet ist. Durch die Widerstände bzw. durch das Widerstandsverhältnis wird im eingeschwungenen Betriebszustand der Wert der Spannung gegen Masse am Ausgang des Istwertgebers vorbestimmt, wodurch auch die Referenzspannung des Reglers vorbestimmt ist. Dadurch kann man mit einfachen Mitteln in Verbindung mit dem bereits erwähnten Überspannungsschutz nicht nur den Spannungswert im eingeschwungenen Störungsfall bestimmen, sondern außerdem die Werte der mitlaufenden Ausgangsspannungen der anderen Sekundärkreise des primärgetakteten Schaltnetzteils vorbestimmen. Somit erhält man eine einfache Ausführungsform eines Überspannungsschutzes für ein primärgetaktetes Schaltnetzteil mit mehreren galvanisch getrennten Sekundärkreisen, ohne dabei wenigstens eine der mitlaufenden Spannungen zu überwachen.

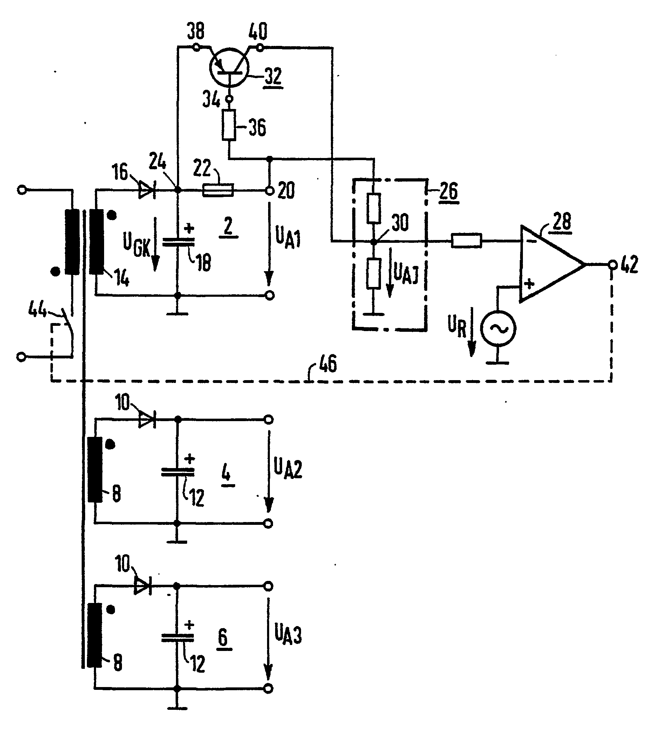

Zur weiteren Erläuterung der Erfindung wird auf die Zeichnung Bezug genommen, in der ein Ausführungsbeispiel des primärgetakteten Schaltnetzteils mit mehreren galvanisch getrennten Sekundärkreisen nach der Erfindung schematisch veranschaulicht ist.

In der dargestellten Ausführungsform ist ein primärgetaktetes Schaltnetzteil mit drei galvanisch getrennten Sekundärkreisen 2, 4 und 6 dargestellt, von denen der Sekundärkreis 2 eine geregelte Ausgangsspannung $U_{A1}$ erzeugt. Die Sekundärkreise 4 und 6 erzeugen durch die magnetische Kopplung mitlaufende Ausgangsspannungen $U_{A2}$ und $U_{A3}$. Diese Sekundärkreise 4 und 6 bestehen jeweils aus einer Sekundärwicklung 8, einer Diode 10 und einem Glättungskondensator 12. Ebenfalls beim Sekundärkreis 2 ist zur Sekundärwicklung 14 die Reihenschaltung aus einer Diode 16 und einem Glättungskondensator 18 elektrisch parallel geschaltet. Die Ausgangsklemme 20 des Sekundärkreises 2 ist über eine Sicherung 22 mit dem Verbindungspunkt 24 des Glättungskondensators 18 und der Diode 16 verbunden. Außerdem ist die Ausgangsklemme 20 mit einem Istwertgeber 26 mit nachgeschaltetem Regler 28 versehen. Als Istwertgeber 26 ist ein Spannungsteiler vorgesehen, wobei der invertierende Eingang des Reglers 28 mit der Ausgangsklemme 30 des Istwertgebers 26 verbunden ist. Zwischen dem Verbindungspunkt 24 des Glättungskondensators 18 und der Sicherung 22 und der Ausgangsklemme 30 des Istwertgebers 26 ist ein Transistor als Schalter 32 derart angeordnet, daß die Basis 34 mittels eines Basiswiderstandes 36 mit der Ausgangsklemme 20 des Sekundärkreises 2, der Emitter 38 mit dem Verbindungspunkt 24 und der Kollektor 40 mit der Ausgangsklemme 30 des Istwertgebers 26 verbunden sind. Der nicht invertierende Eingang des Reglers 28 ist mit einer Referenzspannung $U_R$ verbunden, wobei der Ausgang 42 des Reglers 28 auf einen primären Leistungsschalter 44 wirkt. Diese Wirkungslinie ist in der Figur durch eine strichpunktierte Linie 46 dargestellt.

Im eingeschwungenen Betriebszustand soll die Ausgangsspannung $U_{A1}$ des Sekundärkreises 2 beispielsweise 5 Volt betragen. Die mitlaufenden Ausgangsspannungen $U_{A2}$ und $U_{A3}$ sollen 12 Volt und 15 Volt betragen. In diesem Betriebszustand ist der Schalter 32 geöffnet, d.h. der vorgesehene pnp-Transistor ist im Sperrzustand. Das Widerstandsverhältnis der Istwertvorrichtung 26 ist beispielsweise 1 : 1, d.h. die Spannung $U_{AI}$ am Ausgang 30 des Istwertgebers 26 ergibt sich zu 2,5 Volt. Damit die Ausgangsspannung $U_{A1}$ auf 5 Volt stabilisiert ist, muß die Referenzspannung $U_R$ gleich 2,5 Volt sein. Beim Auftreten einer Überspannung, verursacht durch einen Kurzschluß am Ausgang 20 des Sekundärkreises 2, löst die Sicherung 22 aus, wodurch ein Potentialunterschied sich zwischen der Ausgangsklemme 20 und dem Verbindungspunkt 24 bzw. der Basis 34 und dem Emitter 38 des als Schalters 32 vorgesehenen pnp-Transistors einstellt. Dadurch schaltet der Schalter 32 ein und verbindet die Ausgangsklemme 30 des Istwertgebers 26 mit dem Verbindungspunkt 24. Mit dieser Verbindung springt die Spannung $U_{AI}$ am Ausgang 30 des Istwertgebers 26 auf den Wert der Glättungskondensatorspannung $U_{GK}$, der höher ist als der Wert der Referenzspannung. Diesem Spannungssprung wirkt der Regler 28 derart entgegen, daß das Tastverhältnis des primären Leistungsschalters 44 abgesenkt wird. Gleichzeitig vermindert sich die Glättungskondensatorspannung $U_{GK}$ nach einem vorbestimmten zeitlichen Verlauf. Sobald die Spannung $U_{AI}$ am Ausgang 30 des Istwertgebers 26 unter die Referenzspannung $U_R$ sinkt, hebt der Regler 28 das Tastverhältnis des primären Leistungsschalters 44 wieder an. Im eingeschwungenen Zustand im Störbetrieb mit ausgelöster Sicherung 22 stellt sich eine Spannung mit einem Wert von 2,5 Volt ein, d.h., die Ausgangsspannung des Sekundärkreises 2 im Störbetrieb ist gegenüber der geregelten Ausgangsspannung $U_{A1}$ des Sekundärkreises 2 halbiert. Dadurch sind auch die mitlaufenden Ausgangs- spannungen $U_{A2}$ und $U_{A3}$ infolge der magnetischen Kopplung und dem geänderten Tastverhältnis des primären Leistungsschalters 44 halbiert. Somit erhält man mit einfachen Mitteln einen Überspannungsschutz für ein primärgetaktetes Schaltnetzteil mit mehreren galvanisch getrennten Sekundärkreisen 2, 4 und 6, ohne dabei eine mitlaufende Ausgangsspannung $U_{A2}$ oder $U_{A3}$ zusätzlich zu überwachen. Außerdem stellt sich im Störungsfall ein stabiler Betriebspunkt ein, der unterhalb des geregelten Betriebspunktes liegt, wobei der stabile Betriebspunkt im Störfall über das Widerstandsverhältnis des Istwertgebers 26 vorbestimmt wird. Ferner werden auch die Werte der mitlaufenden Ausgangsspannungen $U_{A2}$ und $U_{A3}$ im Störungsfall durch das Widerstandsverhältnis des Istwertgebers 26 bestimmt.

**Patentansprüche**

1. Primärgetaktetes Schaltnetzteil mit mehreren galvanisch getrennten Sekundärkreisen (2, 4, 6), wobei der Ausgang (20) des Sekundärkreises (2) mit einem Istwertgeber (26) mit nachgeschaltetem Regler (28) verbunden ist und wobei dieser Ausgang (20) mittels einer dem Glättungskondensator (18) nachgeschalteten Sicherung (22) abgesichert ist, dadurch gekennzeichnet, daß der Verbindungspunkt (24) vom Glättungskondensator (18) und Sicherung (22) mittels eines Schalters (32) mit der Ausgangsklemme (30) des Istwertgebers (26) verbunden ist, wenn die Sicherung (22) ausgelöst hat.

2. Primärgetaktetes Schaltnetzteil nach Anspruch 1, **dadurch gekennzeichnet**, daß als Istwertgeber (26) ein Spannungsteiler vorgesehen ist.

3. Primärgetaktetes Schaltnetzteil nach Anspruch 1, **dadurch gekennzeichnet**, daß als Schalter (32) ein Transistor vorgesehen ist.

4. Primärgetaktetes Schaltnetzteil nach einem der Ansprüche 1 bis 3, **dadurch gekennzeichnet**, daß die Basis (34) des Transistors mit der Ausgangsklemme (20) des Sekundärkreises (2), der Emitter (38) mit dem Verbindungspunkt (24) vom Glättungskondensator (18) und Sicherung (22) und der Kollektor (40) mit der Ausgangsklemme (30) der Istwertgeber (26) verbunden sind.

**Claims**

1. Primary switched-mode power supply unit having several electrically isolated secondary circuits (2, 4, 6), in which the output (20) of the secondary circuit (2) is connected with an actual value sensor (26) with downstream controller (28) and in which said output (20) is fused by means of a fuse (22) downstream to the smoothing capacitor (18), characterised in that the interconnection point (24) of the smoothing capacitor (18) and fuse (22) is connected by means of a switch (32) with the output terminal (30) of the actual value sensor (26) when the fuse (22) has tripped.

2. Primary switched-mode power supply unit according to claim 1, characterised in that a potential divider is provided as an actual value sensor (26).

3. Primary switched-mode power supply unit according to claim 1, characterised in that a transistor is provided as switch (32).

4. Primary switched-mode power supply unit according to one of the claims 1 to 3, characterised in that the base (34) of the transistor is connected with the output terminal (20) of the secondary circuit (2), the emitter (38) is connected with the interconnection point (24) of the smoothing capacitor (18) and fuse (22) and the collector (40) is connected with the output terminal (30) of the actual value sensor (26).

## Revendications

1. Alimentation à partir du secteur, du type à découpage dans le circuit primaire, comprenant plusieurs circuits secondaires (2, 4, 6) séparés galvaniquement, dans laquelle la sortie (20) d'un circuit secondaire (2) est reliée à un générateur de valeur réelle (26) suivi d'un régulateur (28) et dans laquelle cette sortie (20) est protégée au moyen d'un coupe-circuit (22) monté à la suite d'un condensateur de lissage (18), caractérisée en ce que le point de connexion (24) du condensateur de lissage (18) et du coupe-circuit (22) est relié par un interrupteur (32) à la borne de sortie (30) du générateur de valeur réelle (26) lorsque le coupe-circuit (22) a été déclenché.

2. Alimentation selon la revendication 1, caractérisée en ce que le générateur de valeur réelle (26) est un diviseur de tension.

3. Alimentation selon la revendication 1, caractérisée en ce que l'interrupteur (32) est un transistor.

4. Alimentation selon une des revendications 1 à 3, caractérisée en ce que le transistor est relié par sa base (34) à la borne de sortie (20) dudit circuit secondaire (2), par l'émetteur (38) au point de connexion (24) du condensateur de lissage (18) et du coupe-circuit (22) et par le collecteur (40) à la borne de sortie (30) du générateur de valeur réelle (26).